# EUROPÄISCHE PATENTSCHRIFT

(11) **EP 1 068 468 B1**
(45) Veröffentlichungstag und Bekanntmachung des Hinweises auf die Patenterteilung: **05.02.2003**
(21) Anmeldenummer: 99909136.6
(22) Anmeldetag: 30.03.1999
(51) Int. Cl.: F16L 55/132, F16K 7/10

(54) **DICHTELEMENT FÜR ROHRLEITUNGEN**
SEALING ELEMENT FOR PIPING
ELEMENT D'ETANCHEITE DESTINE AUX CONDUITES

(30) Priorität: 09.04.1998 DE 29806603 U
(43) Veröffentlichungstag der Anmeldung: 17.01.2001
(73) Patentinhaber: KA-TE System AG, CH-8041 Zürich (CH); Hecht, Reinhard, 93047 Regensburg (DE); Manstorfer, Karl, 93047 Regensburg (DE)
(72) Erfinder: HECHT, Reinhard, D-93047 Regensburg (DE); MANSTORFER, Karl, D-93047 Regensburg (DE)
(74) Vertreter: Patentanwälte Schaad, Balass, Menzl & Partner AG
(86) Internationale Anmeldenummer: IB9900564
(87) Internationale Veröffentlichungsnummer: WO99053233

(56) Entgegenhaltungen:
- EP-A- 0 372 963
- EP-A- 0 537 052
- DE-U- 29 720 570
- GB-A- 2 056 012
- US-A- 2 279 257
- US-A- 4 013 097
- US-A- 5 462 077

## Beschreibung

Die Erfindung betrifft ein Dichtelement zur Abdichtung von Rohrleitungen mit einem aufpumpbaren Balg, der im aufgepumpten Zustand ein Anliegen des Dichtelementes an einer Innenwand der Rohrleitung bewirkt.

Durch die US-A-4 013 097 ist eine gattungsgemäße Einrichtung bekannt.

Derartige Dichtelemente werden auch als "Rohrdichtkissen" oder "Absperrblasen" bezeichnet und haben vielfältige Einsatzmöglichkeiten. Sie kommen beispielsweise bei Rohrund Kanalabsperrungen, bei Dichtheitsprüfungen, Durchflussmengenmessungen und in vielen anderen Bereichen zum Einsatz. Das Dichtelement wird dabei in die Rohrleitung eingebracht und aufgepumpt, wobei sich die Aussenhülle des Balges an der Innenwand der Rohrleitung anlegt und dadurch eine Abdichtung gewährleistet.

Die aus der Praxis bekannten Dichtelemente sind für verschiedene Rohrdurchmesser erhältlich. Die bekannten Dichtelemente können jedoch nur saubere und glatte Innenwandflächen von Rohrleitungen zufriedenstellend abdichten. Bei Verunreinigungen, Unebenheiten oder Beschädigungen der Rohrleitungen ist eine druckfeste, sichere Abdichtung oft nicht zu erreichen.

In Entwässerungskanälen werden neuerdings auch Kommunikationskabel oder Schutzröhrchen mit Kabeln verlegt, die den Einsatz der herkömmlichen Dichtelemente nicht ermöglichen, da die Dichtelemente nicht flexibel genug sind, um den Hohlraum zwischen Kabeln bzw. Röhrchen und Rohrinnenwand abzudichten.

In der DE-U-297 20 570 wurde daher ein separates Segmentstück vorgesehen, das entsprechende Aussparungen für die verlegten Kabel bzw. Leitungen aufweist. Dieses Segmentstück ist an den Durchmesser der Rohrleitung angepasst und besteht aus elastischem Material, das zwischen der Rohrinnenwand und einem Rohrdichtkissen angeordnet wird.

Diese Abdichtsystem berücksichtigt jedoch nicht die Problematik bei etwaigen Verunreinigungen, Unebenheiten oder Beschädigungen der Rohrinnenwand. Ferner ist die Anbringung dieses Abdichtsystems nur an von Hand zugänglichen Stellen einsetzbar. Die Abdichtung eines Rohrabschnittes, welcher nicht von den Schächten aus zugänglich ist, ist nicht möglich. Ferner ist ein relativ grosser zeitlicher Aufwand für die Herstellung der Abdichtung erforderlich, so dass dieses Dichtsystem für einen schnellen Einsatz im Störfall ungeeignet ist. Ferner müssen die Segmentstücke an die in der Rohrleitung verlegten Kabel und Röhrchen angepasst sein, um eine möglichst gute Abdichtung zu gewährleisten.

Der Erfindung liegt daher die Aufgabe zugrunde, ein Dichtelement zur Abdichtung von Rohrleitungen gemäss dem Oberbegriff des Anspruches 1 anzugeben, das zum einen einfach handhabbar ist und zum anderen auch in Rohrleitungen mit Kabeln und/oder Röhrchen eine zuverlässige Abdichtung gewährleistet.

Diese Aufgabe wird erfindungsgemäss durch die Merkmale des Anspruches 1 gelöst, dadurch, dass das Dichtelement auf seiner an der Innenwand der Rohrleitung anliegenden Aussenseite wenigstens auf Teilbereichen seines Umfanges ein formbeständiges, leicht deformierbares Gel aufweist, das im aufgepumpten Zustand des Balges mit der Innenwand der Rohrleitung in direkten, dichtenden Kontakt kommt.

Als Gel kommt ein Gel mit vernetzten Molekülen, mit Formgedächtnis und gutem, reaktionsfreien Fliessverhalten unter Kompression zum Einsatz. Die Kohäsionskräfte der Moleküle in diesem Gel sind grösser als die Adhäsionskräfte der Moleküle gegenüber beispielsweise der Innenwand der Rohrleitung oder gegenüber im Rohr verlegten Kabeln. Mit einem solchen Gel können erstens Hohlräume, z.B. zwischen Unebenheiten und Kabeln, dichtend ausgefüllt werden. Andererseits bietet ein solches Gel die Gewähr, dass das Dichtelement problemlos wieder von der Innenwand der Rohrleitung abgelöst werden kann, wobei das Gel ohne grossen Verschleiss in seinen Ausgangszustand zurückkehrt, so dass das Dichtelement vielfach montiert und demontiert werden kann.

Weitere Ausgestaltungen der Erfindung sind Gegenstand der Unteransprüche.

Bei einer besonders bevorzugten Ausführungsform weist der Balg auf seiner gesamten der Innenwand der Rohrleitung zugewandten Aussenseite das Gel auf. Dies ist dann von besonderem Vorteil, wenn z.B. ältere Rohrleitungen mit durch Ablagerungen und/oder Korrosion sehr unebenen Innenwänden abgedichtet werden sollen.

In einer weiteren bevorzugten Ausführungsform ist der Balg des Dichtelementes zylindrisch und weist eine sich ringförmig in Umfangsrichtung erstreckende Vertiefung auf, welche das Gel enthält.

Weitere Vorteile und Ausgestaltungen der Erfindung werden anhand der Beschreibung verschiedener, in den folgenden Figuren dargestellter Ausführungsformen näher erläutert.

In den Figuren sind schematisch dargestellt:
- Fig. 1: eine dreidimensionale, perspektivische Ansicht eines erfindungsgemässen Dichtelementes;
- Fig. 2: ein Längsschnitt entlang der Schnittebene II in Fig. 1;
- Fig. 3: ein Querschnitt entlang der Schnittebene III in Fig. 1
- Fig. 4: das Dichtelement aus Fig. 1 eingebracht in eine Rohrleitung im Schnitt quer zur Längsachse des Rohres;
- Fig. 5: zwei Dichtelemente, wie sie in Fig. 1 dargestellt sind, im Einsatz in einer Rohrleitung;
- Fig. 6a: ein ringförmiger Balg eines Dichtelementes mit einer in Form einer segmentartigen Auslassung ausgestalteten, Gel enthaltenden Vertiefung und einer in Form einer Nut ausgestalteten, Gel enthaltenden Vertiefung;
- Fig. 6b: ein Schnitt durch den in Fig. 6a dargestellten Balg des Dichtelementes entlang der Schnittlinie IV-IV;
- Fig. 7a: ein ringförmiger Balg eines Dichtelementes mit Gel auf seiner gesamten der Innenwand der Rohrleitung zugewandten Aussenseite; und
- Fig. 7b: ein Schnitt durch den in Fig. 7a dargestellten Balg des Dichtelementes entlang der Schnittlinie V-V.

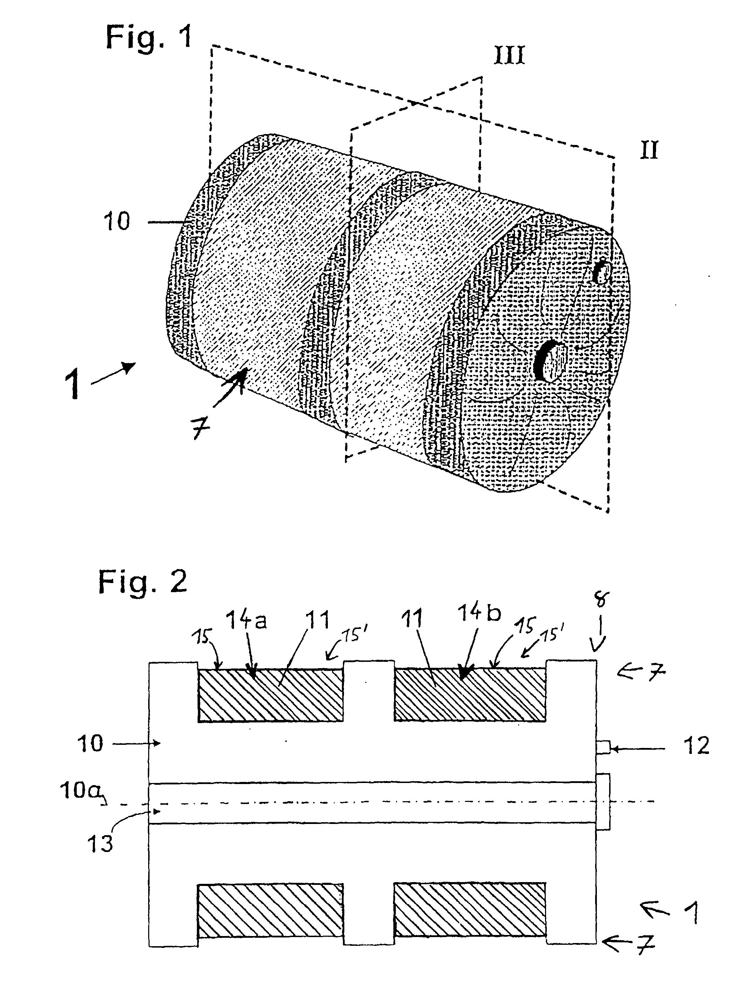

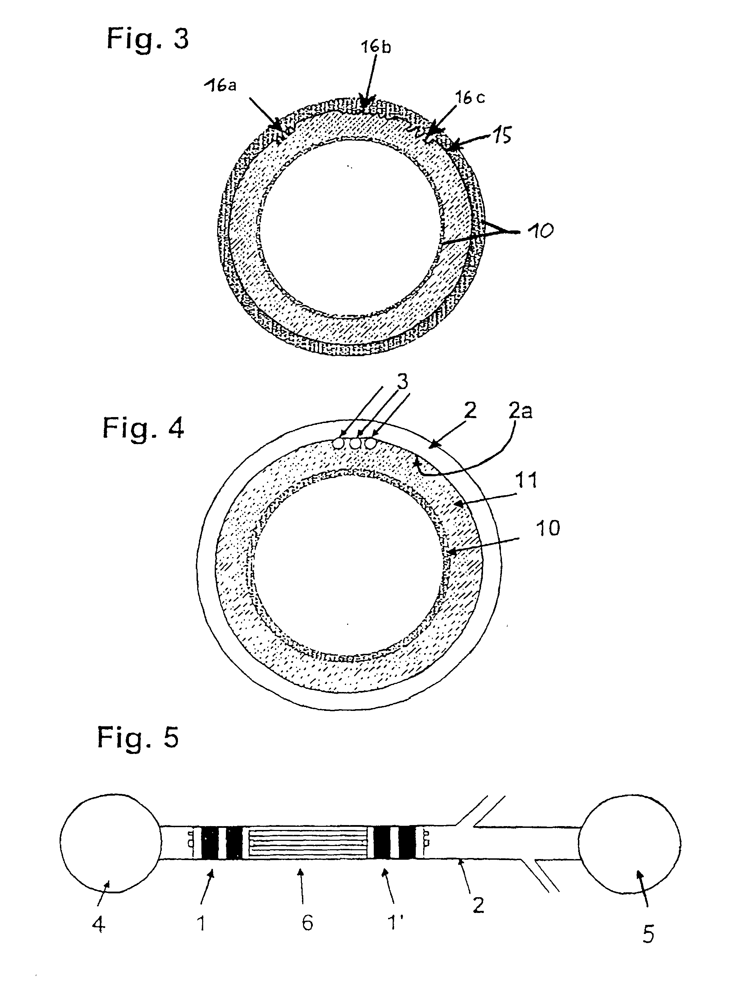

Das in den Fig. 1 bis 4 dargestellte Dichtelement 1 zum Abdichten von Rohrleitungen 2 weist einen aufpumpbaren Balg 10 auf, der im aufgepumpten Zustand an einer Innenwand 2a einer Rohrleitung 2 anliegt. Der Balg 10 weist auf seiner der Innenwand 2a der Rohrleitung 2 zugewandten Aussenseite 7 wenigstens eine Vertiefung 14a auf, die ein formbeständiges, leicht deformierbares Gel 11 enthält, das im aufgepumpten Zustand des Balges 10 ebenfalls mit der Innenwand 2a der Rohrleitung 2 in Kontakt kommt (siehe Fig. 4)

Der Balg 10 ist im wesentlichen zylindrisch ausgebildet und weist auf einer Stirnseite 8 ein Luftventil 12 auf, über das der Balg 10 aufgepumpt wird. Der Balg 10 ist ferner mit einer Durchflussleitung 13 versehen, um beispielsweise ein dosiertes Ableiten von Flüssigkeit aus einem abgesperrten Rohrleitungsabschnitt 6 (vgl. Fig. 5) zu ermöglichen.

Die Vertiefung 14a ist im dargestellten Ausführungsbeispiel ringförmig um die Längsachse 10a des Balges ausgebildet. Vorzugsweise sind jedoch wenigstens zwei Vertiefungen 14a, 14b vorgesehen, die in Richtung der Längsachse 10a voneinander beabstandet sind. Im dargestellten Ausführungsbeispiel ist eine zweite Vertiefung 14b vorgesehen, die ebenfalls das Gel 11 enthält.

Damit das Gel 11 seine abdichtende Wirkung voll entfalten kann, sind die Vertiefungen 14a, 14b derart ausgebildet, dass sie das Gel 11 bis auf die der Rohrinnenwand 2a zugewandten Seite 15' auf allen Seiten begrenzen, um dadurch ein seitliches Wegdrücken des Gels zu verhindern. Beim Aufblasen bzw. Aufpumpen des Balges 10 füllt das leicht deformierbare Gel 11 etwaige Unebenheiten und Beschädigungen an der Innenwand 2a des Rohres 2 aus und umschliesst etwa vorhandene Kabel 3, wie das in Fig. 4 dargestellt ist.

Das Gel 11 ist formbeständig, so dass dieses nach Herauslassen der Luft aus dem Balg 10 wieder seine ursprüngliche Form annimmt. Zur Verbesserung der Abdichtung im Bereich von Kabeln 3, die an der Innenwand 2a der Rohrleitung 2 verlegt sind, ist es besonders vorteilhaft, wenn die der Innenwand 2a zugewandte Oberfläche 15 des Gels 11 profiliert ausgebildet ist. In Fig. 3 sind beispielhaft drei verschiedene Profilierungen 16a, 16b und 16c dargestellt. Die Oberfläche 15 des Gels 11 ist bei diesen Beispielen jeweils in Längsrichtung, d.h. in Richtung der Längsachse 10a des Balges 10 profiliert, um dadurch eine möglichst gute Umschliessung der ebenfalls in Längsrichtung verlegten Kabel 3 zu gewährleisten.

Das Oberflächenprofil 16a ist im wesentlichen gezackt, das Oberflächenprofil 16b eher rinnenförmig und das Oberflächenprofil 16c geschlitzt ausgebildet. Im Rahmen der Erfindung sind selbstverständlich auch andere Oberflächenprofilierungen 16 denkbar und selbst eine glatte Oberfläche 15 gewährleistet eine zuverlässige Abdichtung.

In Fig. 5 ist ein praktischer Anwendungsfall für erfindungsgemässe Dichtungselemente 1 schematisch dargestellt. Im gezeigten Beispiel sind Dichtungselemente 1, 1' der oben beschriebenen Art im Einsatz. Es soll ein Abschnitt 6 einer zwischen zwei Schächten 4, 5 verlaufenden Rohrleitung 2 überprüft werden. Dazu werden Dichtelemente 1, 1' in die Rohrleitung 2 eingeführt. Nach Aufpumpen der beiden Dichtelemente 1, 1' kann der Bereich 6 der Rohrleitung 2 ungehindert überprüft werden.

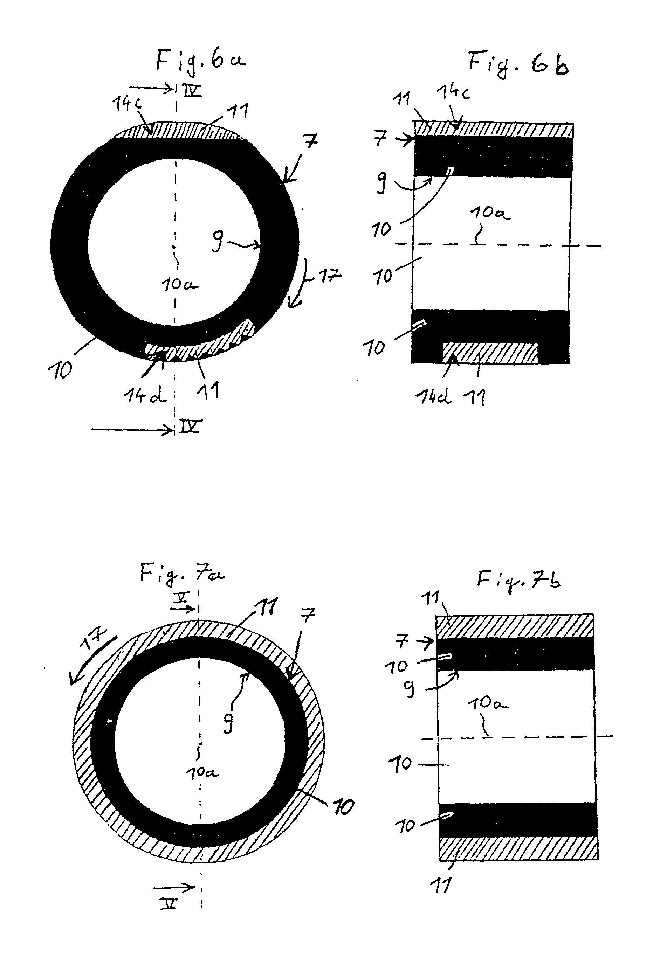

In den Fig. 6a, 6b und 7a, 7b ist jeweils ein ringförmig ausgestalteter Balg 10 eines Dichtelements 1 dargestellt, dessen der Innenwand 2 zugewandte Aussenseite 7 und eine innen liegende Seite 9 im Querschnitt in Form eines Kreises ausgebildet sind.

Der in den Fig. 6a und 6b dargestellte Balg weist auf seiner Aussenseite 7, eine Abflachung 14c und eine Vertiefung 14d in Form einer Nut auf, die jeweils mit dem Gel 11 gefüllt und in Richtung des Umfanges 17 begrenzt sind. Die Vertiefung 14d in Form einer Nut erlaubt den Einsatz einer Anzahl unterschiedlicher Gele 11. Die Abflachung 14c erlaubt eine sehr einfache Herstellung und kann überall dort ausgestaltet werden, wo die Aussenseite 7 des Balges 10 im Querschnitt betrachtet Rundungen aufweist, also Kreissegmente, Ovale, Eiformen usw.. Generell können Abflachungen 14c und Vertiefungen 14d, wie sie hier dargestellt sind, in Richtung der Längsachse 10a des Balges 10 unbegrenzt sein, was sie speziell für den Einsatz in Rohrleitungen mit verlegten Kabeln 3 oder Leitungen geeignet macht. Die Abflachungen 14c und Vertiefungen 14d müssen nur in ihrer Ausdehnung in Umfangsrichtung und in ihrer Anordnung auf der Aussenseite 7 des Balges 10 der Lage der Kabel auf der Innenwand 2a der Rohrleitung 2 angepasst sein.

In den Fig. 7a und 7b weist die Aussenseite 7 des Balges 10 keine speziellen Vertiefungen 14 für das Gel 11 auf, sondern die gesamte Aussenseite 7 ist mit dem Gel 11 versehen. Diese Art das Gel auf den Balg aufzubringen ist sehr einfach und kostengünstig in der Herstellung und erlaubt einen vielfältigen Einsatz des einen solchen Balg 10 aufweisenden Dichtelementes 1.

Je nach vorgesehenem Einsatzort, kann die Aussenseite 7 des Balges 10 geformt sein, d.h. nicht nur die bereits erwähnten Ei-, Oval- und Zylinderformen, sondern auch im Querschnitt betrachtet Rechteck- und andere Polygonformen sowie gemischte Formen mit Ecken und Rundungen. Das gleiche gilt auch bei ringförmig ausgestalteten Balgen 10 für die innen liegende Seite 9 des Balges 10, wobei die innen liegende Seite 9 und die Aussenseite 7 nicht, so wie in den Fig. 6a bis 7b gezeigten Beispiele, die gleiche Form im Querschnitt haben müssen.

Als Gel 11 können thermoplastische, paraffinölhaltige Gele 11, wie sie z.B. von Raychem als S1242, S1269, S1274 oder S1294 angeboten werden, eingesetzt werden.

Die besonderen Vorteile des erfindungsgemässen Dichtelements 1, 1' liegen zum einen in der zuverlässigen Abdichtung von Rohrleitungen 2, auch wenn diese Verschmutzungen, Verunreinigungen oder Beschädigungen oder auch verlegte Kabel 3 aufweisen, und zum anderen darin, dass durch die einteilige Ausbildung eine Anbringung der Dichtelemente 1, 1' auch an Stellen möglich ist, die von Hand nicht zugänglich sind, wobei die Dichtelemente 1, 1' in an sich bekannter Art und Weise eingezogen werden.

## Patentansprüche

1. Dichtelement zur Abdichtung von Rohrleitungen (2) mit einem aufpumpbaren Balg (10), der im aufgepumpten Zustand ein Anliegen des Dichtelementes (1) an einer Innenwand (2a) der Rohrleitung (2) bewirkt,
**dadurch gekennzeichnet, dass** der Balg (10) auf seiner der Innenwand (2a) zugewandten Aussenseite (7) wenigstens auf Teilbereichen seines Umfanges (17) ein formbeständiges, leicht deformierbares Gel (11) trägt, das im aufgepumpten Zustand des Balges (10) mit der Innenwand (2a) der Rohrleitung (2) in direkten, dichtenden Kontakt kommt.

2. Dichtelement nach Anspruch 1, **dadurch gekennzeichnet, dass** das Gel (11) auf der mit der Innenwand (2a) in Kontakt kommenden Oberfläche (15), insbesondere in Richtung der Längsachse (10a) des Balges (10), profiliert ausgebildet ist.

3. Dichtelement nach Anspruch 1 und 2, **dadurch gekennzeichnet, dass** der Balg (10) eine Durchflussleitung (13) aufweist.

4. Dichtelement nach einem der Ansprüche 1 bis 3, **dadurch gekennzeichnet, dass** der Balg (10) ringförmig ausgebildet ist, wobei seine innen liegende Seite (9) und die der Innenwand (2a) der Rohrleitung (2) zugewandte Aussenseite (7) im Querschnitt unterschiedlich ausgestaltet sein können.

5. Dichtelement nach einem der Ansprüche 1 bis 3, **dadurch gekennzeichnet, dass** der Balg (10) annähernd zylindrisch ausgebildet ist und an seiner Stirnseite (8) vorzugsweise ein Luftventil (12) aufweist.

6. Dichtelement nach einem der Ansprüche 1 bis 5, **dadurch gekennzeichnet, dass** der Balg (10) im aufgepumpten Zustand zumindest teilweise an der Innenwand (2a) anliegt.

7. Dichtelement nach einem der Ansprüche 1 bis 6, **dadurch gekennzeichnet, dass** auf der der Innenwand (2a) der Rohrleitung (2) zugewandten Aussenseite (7) eine Vertiefung (14) vorhanden ist, in der das Gel (11) angeordnet ist.

8. Dichtelement nach Anspruch 7, **dadurch gekennzeichnet, dass** sich die Vartiefung (14 bzw.14a) des Balges (10) in Umfangsrichtung (17) erstreckt und vorzugsweise ringförmig geschlossen ist.

9. Dichtelement nach Anspruch 8, **dadurch gekennzeichnet, dass** der Balg (10) wenigstens zwei in Längsrichtung (10a) des Balges (10) voneinander beabstandete Vertiefungen (14a, 14b) aufweist.

10. Dichtelement nach Anspruch 7, dadurch gekennzeichnat, dass sich die Vertiefung (14 bzw. 14c, 14d) in Längsrichtung (10a), vorzugsweise über die gesamte Länge des Balges (10), erstreckt.

11. Dichtelement nach Anspruch 10, **dadurch gekennzeichnet, dass** die Vertiefung (14c, 14d) sich annähernd parallel zu einer Längsachse (10a) des Balges (10) erstreckt.

12. Dichtelement nach Anspruch 10 oder 11, **dadurch gekennzeichnet, dass** der Balg (10) wenigstens zwei zumindest in Umfangrichtung (17) voneinander beabstandete Vertiefungen (14c, 14d) aufweist.

13. Dichtelement nach einen der Ansprüche 10 bis 12, **dadurch gekennzeichnet, dass** die Vertiefung (14d) in Form einer Nut ausgebildet ist.

14. Dichtelement nach wenigstens einem der vorhergehenden Ansprüche, **dadurch gekennzeichnet, dass** dar Balg (10) im Querschnitt mit seiner Aussenseite (7) im wesentlichen einen Kreis, ein Oval oder eine Eiform beschreibt.

15. Dichtelement nach Anspruch 14, **dadurch gekennzeichnet, dass** der Balg (10) an der Aussenseite (7) wenigstens eine Abflachung (14c) aufweist und das Gel im Bereich der Abflachung (14c) angeordnet ist.

16. Dichtelement nach einem der Ansprüche 7 bis 14, **dadurch gekennzeichnet, dass** die Vertiefungen (14) und/oder Abflachungen (14c) sowchl in Umfangrichtung (17) als auch in Längsrichtung (10a) des Balges (10) begrenzt sind.

17. Dichtelement nach einem der Ansprüche 1 bis 5, **dadurch gekennzeichnet, dass** die gesamte der Innenwand (2a) der Rohrleitung (2) zugewandte Aussenseite (7) des Balges (10) das Gel (11) aufweist.

18. Dichtelement nach einem der vorhergehenden Ansprüche, **dadurch gekennzeichnet; dass** sich das Gel (11) durch ein Formgedächtnis und durch etwaige Adhäsionskräfte übersteigende Kohäsionskräfte auszeichnet und insbesondere ein thermoplastisches, paraffinölhaltiges Gel (11) ist.

## Claims

1. Sealing element for sealing pipelines (2), having an inflatable bellows (10) which in the inflated state causes the sealing element (1) to bear against an inner wall (2a) of the pipeline (2), **characterized in that**, on its outer side (7) facing the inner wall (2a), at least on sections of its circumference (17), the bellows (10) carries a dimensionally stable, easily deformable gel (11) which in the inflated state of the bellows (10) comes into direct sealing contact with the inner wall (2a) of the pipeline (2).

2. Sealing element according to Claim 1, **characterized in that** the gel (11) is designed to be profiled on the surface (15) coming into contact with the inner wall (2a), in particular in the direction of the longitudinal axis (10a) of the bellows (10).

3. Sealing element according to Claims 1 and 2, **characterized in that** the bellows (10) has a throughflow line (13).

4. Sealing element according to one of Claims 1 to 3, **characterized in that** the bellows (10) is designed in a ring shape, in which case its inner side (9) and the outer side (7) facing the inner wall (2a) of the pipeline (2) can be shaped differently in cross section.

5. Sealing element according to one of Claims 1 to 3, **characterized in that** the bellows (10) is of approximately cylindrical design and preferably has an air valve (12) on its end face (8).

6. Sealing element according to one of Claims 1 to 5, **characterized in that** the bellows (10) bears at least partly against the inner wall (2a) in the inflated state.

7. Sealing element according to one of Claims 1 to 6, **characterized in that** on the outer side (7) facing the inner wall (2a) of the pipeline (2) a recess (14) is present in which the gel (11) is arranged.

8. Sealing element according to Claim 7, **characterized in that** the recess (14 or 14a) of the bellows (10) extends in the circumferential direction (17) and is preferably closed in a ring shape.

9. Sealing element according to Claim 8, **characterized in that** the bellows (10) has at least two recesses (14a, 14b) at a distance from one another in the longitudinal direction (10a) of the bellows (10).

10. Sealing element according to Claim 7, **characterized in that** the recess (14 or 14c, 14d) extends in the longitudinal direction (10a), preferably over the entire length of the bellows (10).

11. Sealing element according to Claim 10, **characterized in that** the recess (14c, 14d) extends approximately parallel to a longitudinal axis (10a) of the bellows (10).

12. Sealing element according to Claim 10 or 11, **characterized in that** the bellows (10) has at least two recesses (14c, 14d) at a distance from one another in at least the circumferential direction (17).

13. Sealing element according to one of Claims 10 to 12, **characterized in that** the recess (14d) is designed in the form of a groove.

14. Sealing element according to at least one of the preceding claims, **characterized in that**, in cross section, the bellows (10) essentially describes a circle, an oval or an egg shape with its outer side (7).

15. Sealing element according to Claim 14, **characterized in that** the bellows (10) has at least one flat (14c) on the outer side (7), and the gel is arranged in the region of the flat (14c).

16. Sealing element according to one of Claims 7 to 14, **characterized in that** the recesses (14) and/or flats (14c) are limited in both the circumferential direction (17) and the longitudinal direction (10a) of the bellows (10).

17. Sealing element according to one of Claims 1 to 5, **characterized in that** the entire outer side (7), facing the inner wall (2a) of the pipeline (2), of the bellows (10) has the gel (11).

18. Sealing element according to one of the preceding claims, **characterized in that** the gel (11) is distinguished by shape memory and by cohesion forces exceeding any adhesion forces and is in particular a thermoplastic gel (11) containing paraffin oil.

## Revendications

1. Elément d'étanchéité pour réaliser l'étanchéité de conduites tubulaires (2), comprenant un soufflet gonflable (10), qui applique dans l'état gonflé l'élément d'étanchéité (1) contre une paroi interne (2a) de la conduite tubulaire (2), **caractérisé en ce que** le soufflet (10) porte, sur son côté extérieur (7) tourné vers la paroi interne (2a), au moins sur des régions partielles de sa périphérie (17), un gel (11) facilement déformable, de forme stable, qui vient en contact d'étanchéité direct, dans l'état gonflé du soufflet (10), avec la paroi interne (2a) de la conduite tubulaire (2).

2. Elément d'étanchéité selon la revendication 1, **caractérisé en ce que** le gel (11) sur la surface (15) venant en contact avec la paroi interne (2a), en particulier dans la direction de l'axe longitudinal (10a) du soufflet (10), est réalisé de manière profilée.

3. Elément d'étanchéité selon les revendications 1 et 2, **caractérisé en ce que** le soufflet (10) présente une conduite de passage (13).

4. Elément d'étanchéité selon l'une quelconque des revendications 1 à 3, **caractérisé en ce que** le soufflet (10) est réalisé avec une forme annulaire, son côté (9) se trouvant vers l'intérieur et le côté extérieur (7) tourné vers la paroi interne (2a) de la conduite tubulaire (2) pouvant être configurés différemment en section transversale.

5. Elément d'étanchéité selon l'une quelconque des revendications 1 à 3, **caractérisé en ce que** le soufflet (10) est réalisé de manière approximativement cylindrique et présente sur son côté de bout (8) de préférence un clapet d'air (12).

6. Elément d'étanchéité selon l'une quelconque des revendications 1 à 5, **caractérisé en ce que** le soufflet (10) dans l'état gonflé s'applique au moins partiellement contre la paroi interne (2a).

7. Elément d'étanchéité selon l'une quelconque des revendications 1 à 6, **caractérisé en ce qu'**il est prévu un renfoncement (14) sur le côté extérieur (7) tourné vers la paroi interne (2a) de la conduite tubulaire (2), dans lequel le gel (11) est placé.

8. Elément d'étanchéité selon la revendication 7, **caractérisé en ce que** le renfoncement (14, respectivement 14a) du soufflet (10) s'étend dans la direction périphérique (17) et est fermé de préférence annulairement.

9. Elément d'étanchéité selon la revendication 8, **caractérisé en ce que** le soufflet (10) présente au moins deux renfoncements (14a, 14b) espacés l'un de l'autre dans la direction longitudinale (10a) du soufflet (10).

10. Elément d'étanchéité selon la revendication 7, **caractérisé en ce que** le renfoncement (14, respectivement 14c, 14d) s'étend dans la direction longitudinale (10a), de préférence sur toute la longueur du soufflet (10).

11. Elément d'étanchéité selon la revendication 10, **caractérisé en ce que** le renfoncement (14c, 14d) s'étend approximativement parallèlement à un axe longitudinal (10a) du soufflet (10).

12. Elément d'étanchéité selon la revendication 10 ou 11, **caractérisé en ce que** le soufflet (10) présente au moins deux renfoncements (14c, 14d) espacés l'un de l'autre au moins dans la direction périphérique (17).

13. Elément d'étanchéité selon l'une quelconque des revendications 10 à 12, **caractérisé en ce que** le renfoncement (14d) est réalisé en forme de rainure.

14. Elément d'étanchéité selon au moins l'une des revendications précédentes, **caractérisé en ce que** le soufflet (10) décrit, en section transversale, avec son côté extérieur (7), essentiellement un cercle, un ovale ou une forme ovoïde.

15. Elément d'étanchéité selon la revendication 14, **caractérisé en ce que** le soufflet (10) présente sur le côté extérieur (7) au moins un méplat (14c) et le gel est prévu dans la région du méplat (14c).

16. Elément d'étanchéité selon l'une quelconque des revendications 7 à 14, **caractérisé en ce que** les renfoncements (14) et/ou les méplats (14c) sont limités à la fois dans la direction périphérique (17) et dans la direction longitudinale (10a) du soufflet (10).

17. Elément d'étanchéité selon l'une quelconque des revendications 1 à 5, **caractérisé en ce que** l'ensemble du côté extérieur (7) du soufflet (10) tourné vers la paroi interne (2a) de la conduite tubulaire (2) présente le gel (11).

18. Elément d'étanchéité selon l'une quelconque des revendications précédentes, **caractérisé en ce que** le gel (11) se **caractérise par** une mémoire de forme et par des forces de cohésion surmontant les forces d'adhésion éventuelles, et est en particulier un gel thermoplastique (11), contenant de l'huile de paraffine.
